# EUROPÄISCHE PATENTSCHRIFT

(11) **EP 2 527 697 B1**
(45) Veröffentlichungstag und Bekanntmachung des Hinweises auf die Patenterteilung: **04.11.2015**
(21) Anmeldenummer: 12169068.9
(22) Anmeldetag: 23.05.2012
(51) Int. Cl.: F16K 1/14, F16K 1/42

(54) **Ventil mit druckseitigem Anschluss**
Valve with connection on the discharge side
Soupape avec raccordement côté pression

(30) Priorität: 27.05.2011 DE 102011103313; 23.12.2011 DE 102011056966
(43) Veröffentlichungstag der Anmeldung: 28.11.2012
(73) Patentinhaber: SVM Schultz Verwaltungs-GmbH & Co. KG, 87700 Memmingen (DE); ZF Friedrichshafen AG, 88046 Friedrichshafen (DE)
(72) Erfinder: Scherer, Georg, 87757 Kirchheim (DE); Mang, Helmut, 87700 Memmingen (DE); Schreiber, Florian, 89284 Kadeltshofen (DE); Mayr , Karlheinz, 6900 Bregenz (AT); Moosmann , Markus, 88287 Grünkraut (DE); Hamma , Frank, 88094 Oberteuringen (DE); Remmlinger , Hubert, 88046 Friedrichshafen (DE)
(74) Vertreter: Pfister, Stefan Helmut Ulrich

(56) Entgegenhaltungen:
- DE-U1-202008 014 524
- GB-A- 242 137
- US-A- 2 840 102

## Beschreibung

Die Erfindung betrifft ein Ventil, bestehend aus einem in Strömungsrichtung des Mediums vor einem Sitzventil vorgesehenen Zulaufbereich, wobei das Sitzventil von einem im Zulaufbereich vorgesehenen, losen Schließelement verschließbar ist, wobei eine von einem Stangenantrieb bewegbare Betätigungstange das Schließelement gegen die Strömungsrichtung des Mediums im Bezug auf den Ventilsitz des Sitzventiles anstellt. Gattungsgemäße Ventile werden insbesondere als Druckregelventile, zum Beispiel im Hydraulikkreis eines Automatikgetriebes eingesetzt. In dem Ventil ist eine von einem Stangenantrieb bewegbare Betätigungsstange vorgesehen, die auf das lose Schließelement wirkt. Als Stangenantrieb wird zum Beispiel ein Elektromagnet verwendet. Der Elektromagnet beziehungsweise der Stangenantrieb wird zum Beispiel dann aktiviert, um das Schließelement zur Freigabe der Strömung des Mediums durch das Sitzventil zu betätigen. Üblicherweise wird im abgefallenen beziehungsweise ausgeschalteten Zustand des Stangenantriebes beziehungsweise Elektromagneten das Schließelement von dem Strömungsdruck des Mediums auf den Ventilsitz des Sitzventiles gedrückt, und verschließt so das Sitzventil. Üblicherweise ist ein Sitzventil dadurch ausgezeichnet, dass es einen Ventilsitz aufweist, der zum Beispiel eine Durchgangsbohrung oder -blende begrenzt oder beschreibt und das Schließelement auf dem Ventilsitz aufliegt. Dabei sind diese Ventile in der Regel oftmals so aufgebaut (ohne die nachfolgende Erfindung hierauf zu beschränken), dass in einer ersten Stufe das lose Schließelement vorgesehen ist und in einer zweiten in Strömungsrichtung dahinter liegenden Stufe ein zusätzlicher Verschlusskegel angeordnet ist, der beispielsweise einen Rücklaufraum mit angeschlossenem Rücklauf zu verschließen und zu öffnen vermag.

Bei gattungsgemäßen Ventilen ist beobachtet worden, dass der in Strömungsrichtung fließende Mediumstrom das vor dem Ventilsitz des Sitzventiles angeordnete Schließelement zunächst umströmen muss, um dann durch die relativ schmale Durchströmungsöffnung zwischen Ventilsitz und Schließelement, die durch das Schließelement zu verschließen ist, durchzuströmen. Es ist beobachtet worden, dass die an sich zu bevorzugende laminare Strömung im Ventil zusammenbricht und einer turbulenten Strömung weicht. Diese turbulente Strömung erhöht aber den Strömungswiderstand, was zu entsprechend größer dimensionierten Pumpen für den Mediumsstrom führt, um die gleiche Durchsatzleistung durch das Ventil sicherzustellen. Gleichzeitig geht dies auch nur mit einem höheren Energieaufwand, wobei dies gerade in energiekritischen Anwendungen von Nachteil ist.

Ein Ventil gemäß dem Oberbegriff von Anspruch 1 wird aus der DE 20 2008 014 524 U1 bekannt.

Ausgehend von diesem Stand der Technik ist es Aufgabe der vorliegenden Erfindung, ein Ventil wie eingangs beschrieben so weiter zu entwickeln, dass es ein optimiertes Strömungsverhalten aufweist.

Ausgehend von dem oben beschriebenen Stand der Technik schlägt die Erfindung ein Ventil, insbesondere Druckregelventil vor, welches aus einem in Strömungsrichtung des Mediums vor einem Sitzventil vorgesehenen Zulaufbereich besteht, wobei das Sitzventil von einem im Zulaufbereich vorgesehenen, losen Schließelement verschließbar ist, wobei eine von einem Stangenantrieb bewegbare Betätigungsstange das Schließelement gegen die Strömungsrichtung des Mediums in Bezug auf den Ventilsitz des Sitzventil anstellt, wobei im Zulaufbereich eine Stromführungseinrichtung vorgesehen ist und die Stromführungseinrichtung mit einem Einlaufbereich und einem in Strömungsrichtung des Mediums dazu beabstandeten Auslaufbereich zur definierten Strömungsführung von in dem Einlaufbereich einströmenden Medium versehen ist, wobei die Stromführungseinrichtung mindestens einen Kanalbereich aufweist, der von mindestens einer Kanalwand und einer zum Ventilsitz hin kegelartig, kegelsegmentartig oder schrägabfallenden Kanalboden begrenzt ist und das durch den mindestens einen Kanalbereich strömende Medium zumindest teilweise in einen schraubenbahnähnlichen Drall versetzt.

Der Pfiff der Erfindung liegt darin, dass das durch das Sitzventil strömende Medium nicht mehr - wie im Stand der Technik - mit einem hohen oder ausschließlichen Bewegungsanteil in axialer Richtung (bezogen auf den Ventilsitz) das Sitzventil durchströmt beziehungsweise das Schließelement umströmt, sondern erheblich höhere Bewegungsanteile hat, die hierzu abgewinkelt oder schräg verlaufen und somit, bezogen auf den Ventilsitz, eine bevorzugt tangentiale oder tangentialartige Anströmung der Durchströmungsöffnung (ringartiger Spalt zwischen Schließelement und Ventilsitz) erreicht. Diese Maßnahme verbessert bereits erheblich das Strömungsverhalten des Mediumsstromes durch das erfindungsgemäße Ventil.

Die laminare Strömung durch das gesamte Ventil, insbesondere durch das erfindungsgemäß ausgelegte Sitzventil, bleibt auch bei höheren Fließgeschwindigkeiten des Mediums erhalten. Hieraus resultiert eine erhebliche Optimierung des Strömungsverhaltens, was zu einer merklichen Steigerung des Wirkungsgrades führt, da ansonsten auftauchende Strömungswiderstände vermieden werden.

In einer bevorzugten Ausgestaltung des Vorschlages ist vorgesehen, dass die Stromführungseinrichtung das Medium derart umlenkt, dass das Medium das Schließelement im Wesentlich tangential anströmt. In einer bevorzugten Variante, ohne allerdings die Erfindung hierauf zu beschränken, ist als Schließelement eine Schließkugel vorgesehen. Durch die Ausgestaltung der Stromführungseinrichtung derart, dass das Medium das Schließelement im Wesentlichen tangential anströmt, wird erreicht, dass auch die Kugeloberfläche tangential, nicht frontal, angeströmt wird, was üblicher Weise zu entsprechenden Turbulenzen und Strömungswiderständen führte. Der Ventilsitz des Sitzventiles ist so ausgestaltet, dass dieser mit dem Schließelement in der verschlossenen Stellung optimal zusammenwirkt. Durch das tangentiale Anströmen des Schließelementes erfolgt daher auch ein tangentiales Anströmen des Ventilsitzes, wobei hierbei eine erhebliche Verringerung des Strömungswiderstandes beobachtet wurde.

Dabei ist die Anordnung des Vorschlages so gewählt, dass die Stromführungseinrichtung das Medium derart umlenkt, dass sich der schraubenähnliche Drall des Mediums, insbesondere im Bereich des Sitzventils, besonders im Bereich des Ventilsitzes ausbildet. Das Sitzventil ist - wie bereits ausgeführt - durch den Ventilsitz und dem gegenüber dem Ventilsitz anstellbaren Schließelement gebildet. Der schraubenähnliche Drall des Mediums bildet sich um eine Hilfsachse aus, wobei diese Hilfsachse bevorzugt im Wesentlichen rechtwinklig auf der den Dichtrand des Sitzventils aufnehmenden Ventilebene steht. Diese Hilfsachse wird zum Beispiel alternativ auch als Mittelachse beschrieben und nimmt zum Beispiel den Mittelpunkt des den kreisrunden Ventilsitz beschreibenden Kreis auf. Der Begriff "schraubenähnlich" beziehungsweise "schraubenähnlicher Drall" beschreibt dabei sowohl Bewegungen mit einer axialen (bezogen auf die Symmetrie- beziehungsweise Mittelachse) Bewegungskomponente und einer kreis- beziehungsweise schraubenartigen Bewegungskomponente, wobei die Kreisbahn einen gleichbleibenden oder sich verändernden, zum Beispiel verringernden oder vergrößernden, Durchmesser aufweisen kann. Alle Lösungen sind von dem Begriff "schraubenähnlich" umfasst.

Beispielsweise beträgt der axiale Bewegungsanteil (bezogen auf die Mittelachse) des Mediums auf Höhe des Sitzventils am gesamten Bewegungsvektor des Midiums weniger als 50%.

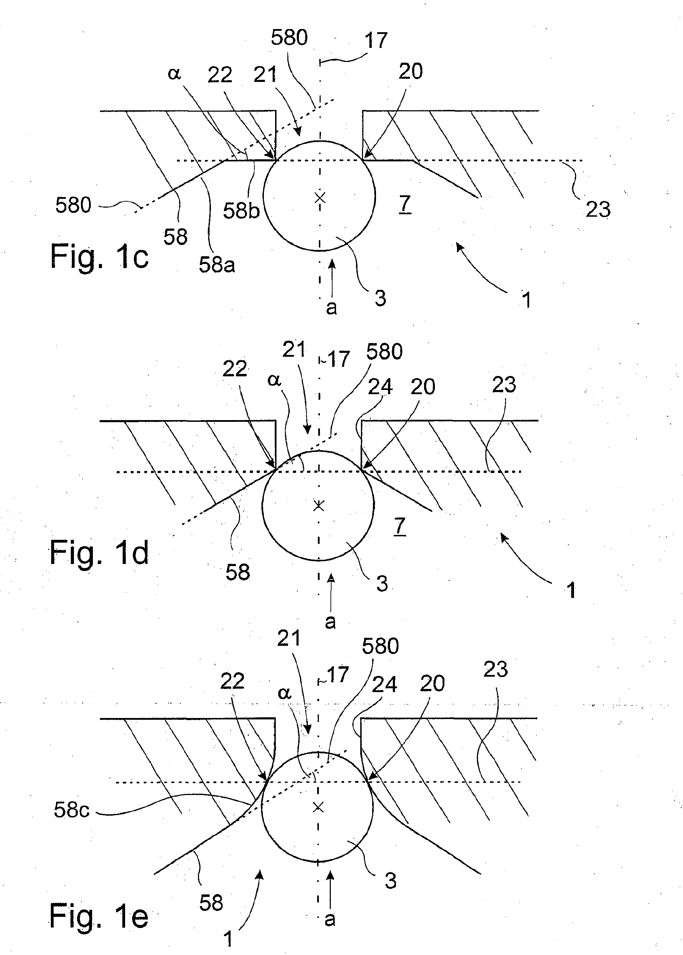

In einer bevorzugten Ausgestaltung ist vorgesehen, dass die den Kanalboden zumindest teilweise aufnehmende Kanalbodenebene mit der den Dichtrand des Sitzventils aufnehmenden Ventilebene einen spitzen Winkel, bevorzugt von 5 bis 85°, insbesondere von 15 bis 75°, besonders bevorzugt von 20 bis 40°, also zum Beispiel 30°±2° beziehungsweise 30°±5° oder 30°±10° einschließt. Im Zusammenhang mit diesem Merkmal wird insbesondere auf die Fig. 1c, 1d und 1e der beiliegenden Zeichnung verwiesen. Da gemäß der Erfindung der Kanalboden kegelartig, kegelsegmentartig oder schräg ausgebildet ist, ist die Kanalbodenebene eine Hilfsebene, die zumindest einen Teil, gegebenenfalls auch nur eine Kante, beziehungsweise Mantellinie des Kanalbodens aufnimmt, mit deren Hilfe die geometrische Orientierung des Kanalbodens zum Sitzventil veranschaulicht wird. Ähnliches gilt für den Begriff "Ventilebene", da dieser Begriff durch das Zusammenwirken des Schließelementes des Ventilsitzes des Sitzventiles beschrieben ist und den Dichtrand aufnimmt. Üblicher Weise wird man unter dem Begriff "Ebene" eine nicht gewölbte Fläche verstehen, ohne den Begriff "Ebene" jedoch hierauf beschränken zu wollen. Der Begriff "Dichtrand" beschreibt dabei die Begrenzung des dichtenden Bereichs des Sitzventils, also des auf dem Ventilsitz ruhenden Schließelementes. Der Dichtrand ist damit der (insbesondere linienförmige) Übergang von dem dichtenden zum im Medium stehenden Ventilbereich.

Wie insbesondere in den Fig. 1c, 1d und 1e gezeigt, gibt es mehrere Varianten, wie der Kanalboden in die den Dichtrand aufnehmende Ventilebene übergeht beziehungsweise an diese anschließt. In diesem Bereich ist die Ausgestaltung der Erfindung sehr flexibel und weitreichend. Durch die bevorzugte Ausgestaltung eines spitzen Winkels zwischen der Ventilebene und der Kanalbodenebene, insbesondere in einem Bereich von 30°±10°, ist ein optimales Strömungsverhalten mit minimalsten Widerständen gefunden worden.

Die Erfindung beschränkt sich dabei nicht nur auf Ausgestaltungen, bei welchen der Kanalboden aus einer Kanalbodenebene beschrieben wird, sondern es ist auch möglich, dass der Kanalboden aus mindestens zwei unterschiedlich geneigten Kanalbodenteilflächen gebildet ist oder die Kanalbodenfläche auch gewölbt, beziehungsweise konkav gewölbt ist. Diese möglichen Ausgestaltungen des Kanalbodens werden als schräg abfallend oder trichter- beziehungsweise trichtersegmentartig beziehungsweise segment- beziehungsweise kegel- oder kegelsegmentartig (diese Begriffe sind untereinander gleichwertig) beschrieben. Für den Fall, dass der Kanalboden aus mindestens zwei unterschiedlich geneigten Kanalbodenteilflächen gebildet ist, schließen die jeweiligen, die einzelnen Kanalbodenteilflächen aufnehmenden Kanalbodenebenen unterschiedliche Winkel mit der Ventilebene oder einer anderen Referenzebene des Ventils ein.

Bei dem aus mehreren Kanalbodenteilflächen gebildeten Kanalboden hat die radial zum Sitzventil weiter außenliegende Teilfläche einen größeren Winkel mit der Ventilebene als die weiter innen liegende. Dieser Winkel kann zum Beispiel zwischen 20 und 85°, bevorzugt zwischen 40 und 80° liegen.

Bevorzugter Weise ist die Kanalwand so ausgebildet, dass diese mit der Ventilebene einen im Wesentlichen rechten Winkel oder einem Winkel zwischen 75° und 90° einschließt. Dabei ist zumindest ein Teil der Kanalwand die Mantelfläche eines Zylinders oder Prismas mit elliptischer Grundfläche, zumindest ein Teil der Kanalwand kann aber auch das Prisma eines Mehrecks sein.

Durch die Ausgestaltung, dass die Kanalwand, insbesondere alle Kanalwände der verschiedenen Kanalbereiche rechtwinklig zur Ventilebene orientiert sind ergibt sich, dass die Gesamtheit der Kanalwände der verschiedenen Kanalbereiche tubusartig ausgebildet sind und konstanten Querschnittsfläche über die Höhe der Kanalwand aufweisen. Die Kanalwand kann aber hierzu auch leicht geneigt sein, zum Beispiel ±5° oder ±10°.

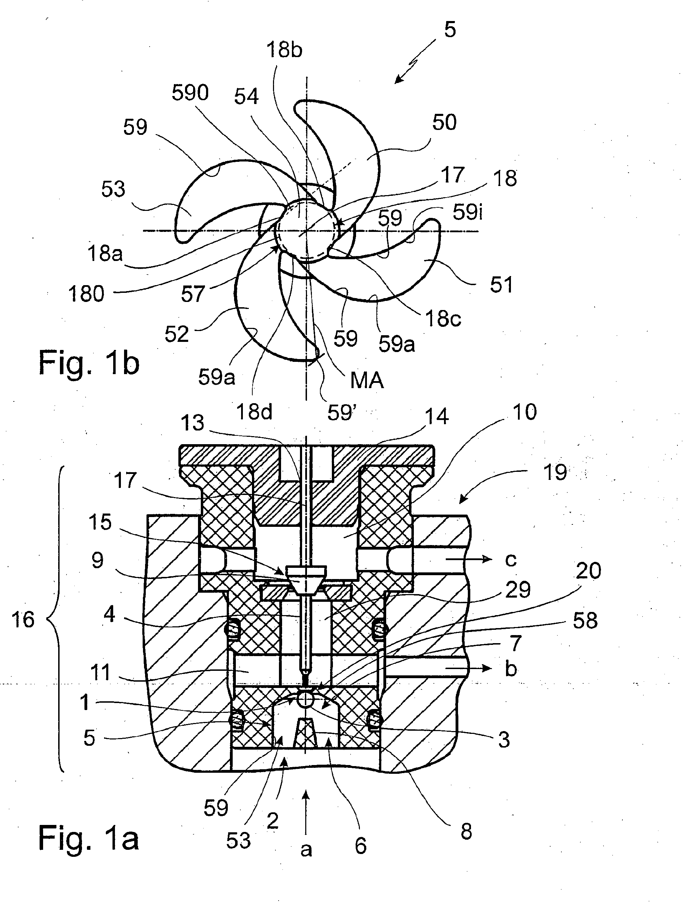

In einer weiteren bevorzugten Ausgestaltung der Erfindung ist vorgesehen, dass der Kanalbereich eine innere und eine äußere, insbesondere zumindest teilweise gebogene Kanalwand aufweist und das Verhältnis der jeweiligen Biegeradien von innerer Kanalwand zur äußeren Kanalwand im Bereich von 1,1 bis 2,5, bevorzugt von 1,2 bis 1,6, insbesondere bevorzugt von 1,2 bis 1,4 oder mehr als 1,2 beziehungsweise 1,3 beträgt. Um den Medienstrom aus seiner bevorzugt axialen Strömungsrichtung auf die zyklon- beziehungsweise schraubenbahnartige Bewegungsbahn umzulenken, ist zumindest ein Kanalbereich turbinenschaufelartig (vgl. zum Beispiel Fig. 1) ausgebildet. Dabei wird der Kanalbereich von einer inneren und einer äußeren Kanalwand begrenzt, wobei die innere Kanalwand (in Draufsicht gesehen - vgl. Fig. 1b) kürzer ist als die äußere Kanalwand. Hieraus resultiert, dass die jeweiligen Biegeradien, mit deren Hilfe die innere beziehungsweise äußere Kanalwand im Mittel beschreibbar ist, unterschiedlich sind, das Verhältnis dieser Biegeradien beschreibt aber die Ausgestaltung des Kanalbereichs. An dieser Stelle ist zu betonen, dass die Biegeradien der inneren beziehungsweise äußeren Kanalwand in keinster Weise jeweils konstant - also unveränderlich - sind, sondern diese Biegeradien können sich, bezogen auf den radialen Abstand zur Mittelachse, auch verändern. Günstiger Weise ist das vorbeschriebene Biegeradienverhältnis - gerade im Innern , dem Dichtrand zugewandten Bereich des Kanalbereichs - bevorzugter Weise in den vorgenannten bevorzugten Verhältnisintervallen. Das vorbeschriebene Verhältnis besteht zumindest in einem Bereich von mindestens 40%, 50%, 60%, 70% oder 85% des maximalen Abstandes (MA) eines Bereiches der Kanalwand.

Insbesondere wird das angegebene Verhältnis auf Bereiche der inneren und äußeren Kanalwand mit dem gleichen radialen Abstand zur Mittelachse des Sitzventils bezogen. Durch ein verhältnismäßig großes Verhältnis, zum Beispiel größer 1,3 oder 1,4 wird das Einbringen der schraubenbahnartigen Bewegung in den Medienstrom erleichtert.

In einer alternativen Ausgestaltung des Vorschlages ist vorgesehen, dass sich der mindestens eine Kanalbereich bezüglich des Sitzventils radial nach außen erstreckt. Das Sitzventil ist durch eine Mittelachse beschreibbar. Die Mittelachse ist zum Beispiel parallel zur Strömungsrichtung im Zulaufsbereich und steht zum Beispiel auf der, diesen Ventilsitz aufnehmenden Fläche, senkrecht. Diese Mittelachse ist daher bezüglich des Sitzventils radial nach außen definiert.

Des Weiteren ist in der bevorzugten Variante der Erfindung vorgesehen, dass die Stromführungseinrichtung eine zumindest halbkäfigartige Führungsanordnung für das lose angeordnete Schließelement aufweist. Eine solche Ausgestaltung erleichtert die Montage des losen Schließelementes und stellt zudem sicher, dass das Schließelement im Betrieb nicht verloren geht.

Bevorzugter Weise ist dabei die Führungsanordnung gebildet aus dem radial dem Ventilsitz am nächsten liegenden Bereichen der Kanalwände, wobei diese Bereiche gemeinsam auf einem Pferchkreis liegen. Durch die Anordnung der Führungsanordnung wird somit der Pferchkreis definiert, wobei eine möglichst rotationssymmetrische Ausgestaltung bevorzugt wird.

Bevorzugter Weise werden mehrere Kanalbereiche in der Stromführungseinrichtung vorgesehen. Es sind zum Beispiel 2, 3, 4, 5, 6 oder noch mehr Kanalbereiche in Umfangsrichtung um die Mittelachse äquidistant angeordnet. Dabei ist geschickterweise der jeweilige Strömungsquerschnitt für das Medium der einzelnen Kanalbereiche gleich, um eine laminare Strömung aufrechtzuerhalten.

In einer bevorzugten Ausgestaltung der Erfindung mündet eine (fiktive) Verlängerung der Kanalwand tangential in den Ventilsitz beziehungsweise das Schließelement. Hierdurch ist eine Möglichkeit angegeben, wie das einströmende Medium auf einer schraubenbahnartigen Bahn den Ventilsitz beziehungsweise das Schließelement tangential anströmt. Insbesondere ist eine Mehrzahl von Kanalbereichen, bevorzugt äquidistant, vorgesehen, und jeder dieser einzelnen Kanalbereiche ist gleichartig ausgebildet, wodurch sich in Umfangsrichtung gesehen die einzelnen Medienströme aus den einzelnen Kanalbereichen sich am Ventilsitz (im zentralen Kanalbereich) wieder zu einem gemeinsamen Strom vereinigen, der auf einer Schraubenbahn abgelenkt ist und so durch das Sitzventil gelangt.

Durch die vorteilhafte Ausgestaltung derart, dass die maximale Kanalbreite des Kanalbereiches kleiner ist als der Durchmesser des Schließelementes, wird sichergestellt, dass das Schließelement in der Stromführungseinrichtung nicht verloren geht. Insbesondere verbleibt das Schließelement innerhalb des Pferchkreises.

In einer weiteren bevorzugten Ausgestaltung der Erfindung ist vorgesehen, dass der Kanalbereich in Richtung des Ventilsitzes einen Kanalspalt aufweist und die Kanalspaltbreite maximal bis zu 50%, bevorzugt bis zu 35%, insbesondere bis zu 25% des Durchmessers des Ventilsitzes oder des Durchmessers des Schließelementes beträgt. Hierdurch wird ebenfalls erreicht, dass das lose Schließelement nicht in der Stromführungseinrichtung verloren geht.

Des Weiteren ist vorgesehen, dass das Verhältnis des maximalen Abstandes eines Bereiches der Kanalwand zum Mittelpunkt des Sitzventils (zum Beispiel der Mittelachse) zu der lichten Weite des Sitzventils (dem Durchmesser des Ventilsitzes oder der Blende) mindestens 2, bevorzugt mindestens 3, insbesondere mindestens 4, vorteilhafter Weise mindestens 5 beträgt. Je größer dieses Verhältnis ist, umso mehr Platz besteht, um die rotativen Bewegungselemente in den Medienstrom einzuprägen.

Vorteilhafter Weise ist vorgesehen, dass das Schließelement als Schließkugel ausgebildet ist.

Des Weiteren ist vorgesehen, dass das Verhältnis des Durchmessers des Schließelementes, beziehungsweise der Schließkugel, zur lichten Weite des Sitzventils zwischen 1,04 und 1,5, bevorzugt zwischen 1,1 und 1,4, insbesondere bevorzugt zwischen 1,15 und 1,3 beträgt. In den angegebenen Verhältnisintervallen ist gefunden worden, dass das Durchflussverhalten durch das erfindungsgemäße Ventil erheblich verbessert ist.

Des Weiteren ist in einer bevorzugten Ausgestaltung der Erfindung vorgesehen, dass das Verhältnis des kürzesten Abstandes von innerer zur äußeren Kanalwand zu der maximalen Kanalbreite im Kanalbereich mindestens 1,5, bevorzugt mindestens 2, insbesondere mehr als 3 beträgt. Insbesondere ist es nach der Erfindung möglich, dass sich der kürzeste Abstand von innerer zu äußerer Kanalwand am Kanalspalt ausbildet oder im Bereich des Kanalspalts ist. Durch eine verhältnismäßig enge Ausgestaltung des Kanalspalts wird ein sehr effizientes (weil genau orientiertes) Anströmen des Ventilsitzes beziehungsweise des Schließelementes in tangentialer Richtung - wie beschrieben - erreicht. Dabei ist die Kanalbreite bevorzugter Weise so bemessen, dass sie etwas kleiner ist als der Durchmesser des Schließelements, damit dieses in der Stromführungseinrichtung nicht verloren geht.

Bevorzugter Weise liegt das Verhältnis des Durchmessers des Pferchkreises zur lichten Weite des Ventilsitzes im Bereich von 1,1 bis 2, bevorzugt von 1,15 bis 1,5, insbesondere bevorzugt von 1,2 bis 1,4 beziehungsweise 1,3 bis 1,4. Diese Verhältnisse zielen darauf ab, dass der Pferchkreis nur wenig größer ist als die lichte Weite des Ventilsitzes. Daher ist das vordere Ende der Kanalwand verhältnismäßig nah an den Ventilsitz herangeführt, was die gewünschte Ausgestaltung einer tangentialen Anströmung des Ventilsitzes beziehungsweise des Schließelementes erheblich unterstützt. Gleichzeitig wird durch die verhältnismäßig enge Ausgestaltung eine optimale Führung des Schließelementes durch die durch den Pferchkreis definierte Führungsanordnung erreicht.

Bevorzugter Weise ist als Stangenantrieb ein Elektromagnet vorgesehen, wobei der Anker des Elektromagneten auf die Betätigungsstange wirkt. Der Aufbau eines Elektromagneten ist hinlänglich bekannt. Ein Wicklungen von Strom durchfließbaren Draht tragender Spulenkörper umgibt zumindest teilweise einen Anker aufnehmenden Ankerraum. In axialer Richtung des Spulenkörpers gesehen schließt sich an den Ankerraum der Magnetkern oder Kern an, der zur Durchführung einer Ankerstange oder der Betätigungsstange eine Bohrung, gegebenenfalls mit Lager- und/oder Führungselementen aufweist. Durch Beaufschlagung des Drahtes mit elektrischem Strom bildet sich im Inneren der Spule ein Magnetfeld aus, welches auf den magnetisierbaren Anker wirkt und diesen, insbesondere über einen Luftspalt hinweg bewegt. Diese Bewegung des Ankers wird entweder direkt oder indirekt, zum Beispiel durch eine Ankerstange, auf die Betätigungsstange übertragen. Dabei ist entweder eine starre Kopplung zwischen dem Anker beziehungsweise der Ankerstange und der Betätigungsstange oder aber eine fliegende Anordnung vorgesehen. Bei der fliegenden Anordnung besteht keine starre Verbindung zwischen dem Anker beziehungsweise der Ankerstange und der Betätigungsstange.

In einer bevorzugten Weiterentwicklung der Erfindung ist vorgesehen, dass in Strömungsrichtung des Mediums nach dem von dem losen Schließelement verschließbaren (ersten) Sitzventil ein weiteres (zweites) Sitzventil vorgesehen ist. Günstiger Weise dient die für die Betätigung des Schließelements des ersten Sitzventils vorgesehene Betätigungsstange auch zur Ansteuerung eines Schließelements dieses zweiten Sitzventils. Z.B. trägt die Betätigungsstange dabei ein kegelartiges Schließelement, das mit dem Ventilsitz des zweiten Sitzventils zusammenwirkt.

So ist zum Beispiel das erste Sitzventil zwischen dem Zulauf und dem Verbraucherausschluß und dem zweiten Sitzventil zwischem dem Verbraucherausschluß und einem Rücklauf angemeldet.

Dabei ist es von Vorteil, dass der bereits in eine Schraubenbahn versetzte Medienstrom diese Drehbewegung auch noch in dem Bereich vor dem zweiten Sitzventil aufweist und daher auch hier eine deutliche Verbesserung des Strömungsverhaltens erreicht wird.

Durch diese Ausgestaltung gelingt es, den Medienstrom in eine schraubenlinienförmige Bewegung umzuformen.

Dabei ist ein Vorzug dieser Ausgestaltung der, dass die Kanalbereiche in ihren Abmessungen so bemessen sind, dass das zum Beispiel als Kugel ausgebildete Verschlußelement nicht in diese Kanalbereiche hineingleiten oder -rutschen kann. Durch die erfindungsgemäße Lösung wird auch erreicht, dass das Schließelement sich im Inneren der Stromführungseinrichtung befindet und zwar derart, dass es nicht mehr aus der Führung gleiten kann. Durch den erfindungsgemäßen Vorschlag wird die schwingende Bewegung der Schließelemente beziehungsweise der Betätigungsstange unterbunden, so dass dieser wesentliche Nachteil der Lösungen des Standes der Technik jetzt nicht mehr auftritt. Ein seperates Verschlusselement verschließt rückseitig die Stromführungseinrichtung nach der Einführung des Schließelementes in den zentralen Kanalbereich, so dass es auch nicht entgegen der Strömungsrichtung des Mediums aus der Stromführungseinrichtung herausgleiten kann, wenn beispielsweise das Ventil drucklos ist.

Somit werden gleich mehrere Vorteile durch die erfindungsgemäße Lösung erreicht, nämlich zum einen, dass eine laminare, und daher mit geringen Ströhmungswiderstand, fließende Strömung erreicht wird und zweitens die Funktion des Schließelementes stets gewährleistet ist, da dieses nicht mehr in die Kanalbereiche oder Kanäle der Stromführungseinrichtung gelangen kann. Dabei wird die Montage des erfindungsgemäßen Ventils enorm erleichtert, weil insbesondere das Einführen des Schließelementes in die Stromführungseinrichtung sehr vereinfacht ist.

Das Verschlusselement der Stromführungseinrichtung kann dabei in einer Art Filterkorb vorgesehen sein, der die Stromführungseinrichtung umgibt. Ein weiterer Aspekt des Verschlusselementes ist darin zu sehen, dass durch den zentralen Verschluss des mittleren Bereiches, in dem sich das Schließelement bewegt, ein axialer Bewegungsfluss des Mediums verhindert wird, da es diesen Bereich nämlich verschließt. Damit wird gleichzeitig eine Zwangsführung des Mediums in die Kanalbereiche erreicht, so dass die gewünschte schraubenlinienförmige Bewegung des Mediums erhalten wird.

Bevorzugter Weise sind dabei die Kanalbereiche schaufelartig, ähnlich wie bei Turbinen in der Draufsicht vorgesehen. In der Ansicht ergibt sich eine kegelförmige beziehungsweise schraubenförmige Ausgestaltung der Kanäle der Stromführungseinrichtung.

In der Zeichnung ist die Erfindung insbesondere in einem Ausführungsbeispiel schematisch dargestellt. Es zeigen:
- Fig. 1a: Schnitt durch ein erfindungsgemäßes Ventil
- Fig. 1b: Draufsicht auf die Stromführungseinrichtung nach der Erfindung in schematischer Darstellung
- Fig. 1c bis 1e: jeweils ein Schritt durch verschiedene Varianten der Ausgestaltung eines Sitzventiles nach der Erfindung.

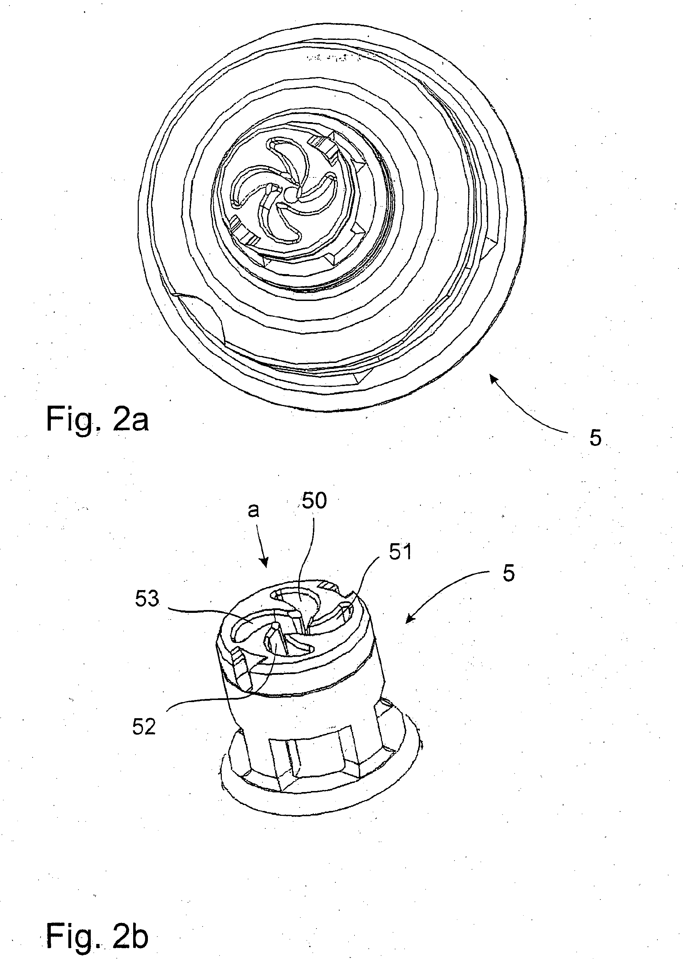

- Fig. 2a,2b,3a,3b,3c: je in einer dreidimensionalen Ansicht unter verschiedenen Blickrichtungen eine Stromführungseinrichtung als einzelnes Bauteil gemäß der Erfindung.

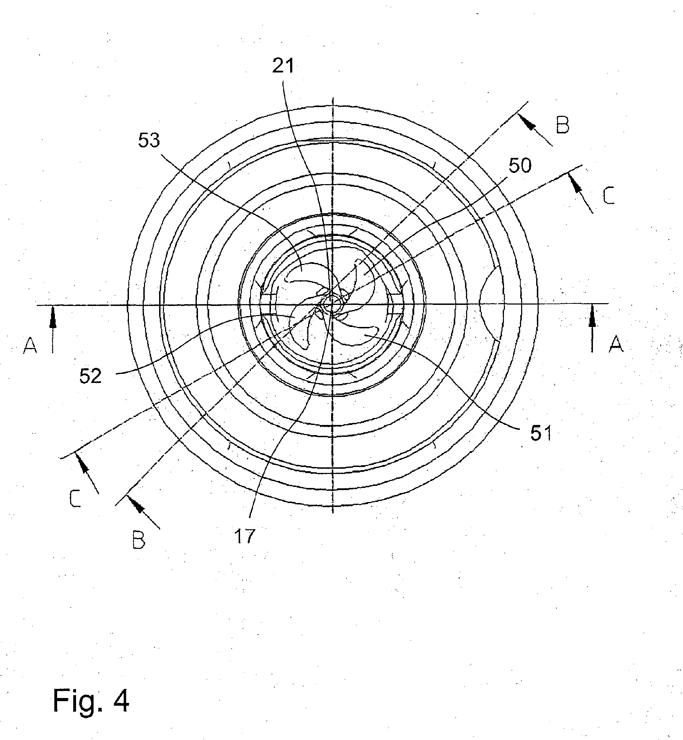

- Fig. 4: eine Unteransicht auf das erfindungsgemäße Ventil.
- Fig. 5,6,7: je ein Schnitt durch eine dreidimensionale Ansicht gemäß Figur 4 entsprechend der Linie A-A (Fig. 5) Linie B-B (Fig. 6) beziehungsweise Linie C-C (Fig. 7).

In den Figuren sind gleiche oder einander entsprechende Elemente jeweils mit den gleichen Bezugszeichen bezeichnet und werden daher, sofern nicht zweckmäßig, nicht erneut beschrieben.

Die Fig. 1a zeigt einen Schnitt durch ein erfindungsgemäßes Ventil 19, das zum Beispiel als Druckregelventil ausgebildet ist. Das erfindungsgemäße Ventil 19 besteht dabei aus einem in Figur 1a im Wesentlichen gezeigten Ventilkörper 16 und einem zum Beispiel als Elektromagnet ausgebildete Antriebseinheit die den Stangenantrieb für die axial (bezogen auf die Mittelachse 17) bewegbare Betätigungsstange 4 zur Verfügung stellt. Dabei ist der Ventilkörper 16 auf das jochartige Kernstück 14 des Elektromagneten aufgesteckt, der Kern 14 besitzt eine Durchdringungsöffnung 13 die der Aufnahme beziehungsweise Führung der Betätigungsstange 4 dient. Der hier nicht gezeigte Elektromagnet schließt sich dann oberhalb des Kernes 14 in üblicher Bauweise an. Bevorzugterweise ist der Stangenantrieb als Elektromagnet ausgebildet, wobei der Anker des Elektromagneten auf die Betätigungsstange wirkt, wobei zum Beispiel eine fliegende Lagerung der Betätigungsstange auf dem Anker vorgesehen sein kann, oder aber auch die Betätigungsstange als Ankerstange ausgebildet, die fest mit dem Anker des Elektromagneten verbunden ist. Der Anker bewegt sich dabei in einem Ankerraum und ist aus magnetisierbaren Material geschaffen. Der Anker positioniert sich aufgrund der durch Stromfluss erzeugten Magnetfeldes im Ankerraum und stellt so über die Betätigungsstange auch die jeweiligen Schaltzustände des Ventiles her. Der prinzipielle Aufbau eines solchen Druckregelventiles ist zum Beispiel aus der europäischen Patentanmeldung 1 004 066 entnehmbar, auf die an dieser Stelle bezüglich der Details eines Elektromagneten vollinhaltlich Bezug genommen wird.

Das Ventil besitzt einen Zulaufbereich 2. Durch diesen strömt das Medium in Strömungsrichtung a in das erfindungsgemäße Ventil 19 ein. In dem Ventilkörper 16 ist im Zulaufbereich 2 eine Stromführungseinrichtung 5 vorgesehen.

Die Stromführungseinrichtung 5 weist einen Einlaufbereich 6 und eine in Strömungsrichtung a des Mediums dazu beabstandeten, nachgeordneten Auslaufsbereich 7 auf. Die Stromführungseinrichtung 5 dient dazu dem in den Einlaufbereich 6 einströmenden Medium eine definierte Strömungsführung zu bieten. Hierzu ist die Stromführungseinrichtung, die noch weiter ausgeführt wird, mit mindestens einem Kanalbereich 50, 51, 52, 53 ausgestattet, wobei der Kanalbereich so gestaltet ist, dass das durchströmende Medium zumindest teilweise in einen schraubenbahnähnlichen Drall versetzt wird.

Der Aufbau des erfindungsgemäßen Ventils 19 ist dabei nun so, dass sich in Strömungsrichtung a nach dem Zulaufbereich 2 ein (erstes) Sitzventil 1 anschließt. Der Zulaufbereich 2 wir daher durch das Sitzventil 1 begrenzt.

In dem hier gezeigten Ausführungsbeispiel ist das Sitzventil 1 auch gleichzeitig in der Stromführungseinrichtung 5 realisiert ohne allerdings hierauf die Erfindung beschränken zu wollen. Funktionell wird der Zulaufbereich 2 durch das Sitzventil 1 beschränkt, konstruktiv ist es grundsätzlich auch möglich, das Sitzventil 1 von der Stromführungseinrichtung 5 mit seiner speziellen Aufgabe (Einprägen einer schraubenbahnförmigen Mediumsbewegung) zu trennen. Dies widerspricht einander nicht.

An dem (ersten) Sitzventil 1 wird der Durchfluss in Richtung zum Verbraucher (angedeutet durch den Pfeil b) gesteuert.

Rückseitig (bezogen auf die Strömungsrichtung a) schließt sich hinter dem ersten Sitzventil 1 ein Auslauf 11 an, der zum einen dazu dient, das Medium in Richtung des Verbrauchers in Verbrauchsrichtung b zu leiten. Vor dem Auslauf 11 zweigt auch ein Seitenarm 29 in Richtung des zweiten Sitzventiles (15) ab.

In Strömungsrichtung des Mediums hinter dem zweiten Sitzventil 15 schließt sich der Rücklaufbereich 10 an das heißt der Seitenarm 29 ist durch das zweite Sitzventil 15 von dem Rücklaufbereich 10 getrennt, die Rücklaufrichtung ist mit dem Pfeil c gekennzeichnet.

Geschickter Weise wird dabei die Anordnung so gewählt, dass die Betätigungsstange 4 sowohl das Schließelement 3 des ersten Sitzventiles 1, wie auch als Dichtkegel 9 ausgebildeten Schließelementes des zweiten Sitzventiles 15 steuert.

Der Aufbau eines Sitzventiles 1 ist allgemein dabei so, dass das Sitzventil 1 gebildet ist von einem im Ventilkörper 16 ortsfesten Ventilsitz 20, auf dem je nach Schaltstellung ein (beweglich angeordneter) Dichtkörper 3 ruht. Der Dichtkörper 3 verschließt dabei eine Blende 21.

In dem Bereich der Stromführungseinrichtung 5 ist ein Einlaufbereich 6 vorgesehen. Des Weiteren ist in Strömungsrichtung a des Mediums dazu beabstandet ein Auslaufbereich 7 in der Stromführungseinrichtung 5 vorgesehen.

Ausgehend von dem Zulaufbereich 2 wird das Medium in Strömungsrichtung a über den Einlaufbereich 6 in Richtung des Auslaufbereichs 7 geführt und dabei - wie in Fig. 1b ersichtlich - durch die schaufelradförmige Anordnung von Kanalbereichen 50-53 in eine Drallbewegung versetzt. Dies geschieht dadurch, dass in Richtung vom Einlaufbereich 6 zum Auslaufbereich 7 diese Kanalbereiche 50-53 zum Beispiel jeweils in Art einer Schraubenlinie geführt sind. Im Zentrum der Stromführungseinrichtung 5 ist dabei ein weiterer zentraler Kanalbereich 54 vorgesehen, der insbesondere dazu dient, ein Schließelement 3, welches in der Fig. 1a ersichtlich ist, aufzunehmen und (halb-)käfigartig beziehungsweise kanalförmig zu umgeben. Dabei ist die Ausgestaltung so, dass das Schließelement 3 nicht aus dem Kanalbereich 54 in die Kanalbereiche 50-53 gleiten oder gelangen kann, weil die Abmessungen dieser Kanalbereiche 50-53 so bemessen sind, dass das Schließelement 3 dort nicht hineingleiten kann. Der Durchmesser des Schließelementes 3, welches beispielsweise als Kugel ausgeführt ist, ist demzufolge größer als der zum Inneren hin liegende Anschluss der jeweiligen Kanalbereiche 50-53, der Kanalspalt 57.

Das Schließelement 3 wird betätigt durch eine Betätigungsstange 4. Diese ist mit einem Elektromagneten verbunden, der in der Abbildung gemäß Fig. 1a oder Fig. 1b nicht gezeigt ist. Durch Beaufschlagung mit Strom wird die Betätigungsstange 4 in Richtung entgegen der Strömungsrichtung a des Mediums - also entgegen dem Druck - bewegt, so dass das Ventil 1 geöffnet wird. Dadurch kann das Medium aus dem Zulaufbereich 2 über den Einlaufbereich 6 und den Auslaufbereich 7 in den Auslauf 11 gelangen. Mit dem Pfeil b ist dabei die Strömungsrichtung für den Auslauf 11 (in Richtung des nicht gezeigten Verbrauchers) bezeichnet. Oberhalb des Auslaufes 11 befindet sich ein Rücklaufbereich 10. Dieser wird üblicher Weise mit einem Dichtkegel 9 verschlossen. Bei Rückstellung der Betätigungsstange 4 wird dabei ein bestimmter Abstand des Kegels zu dem Kegelsitz hergestellt, so dass dort noch vorhandenes Medium in den Rücklaufbereich 10 gelangen kann. Mit c ist die Strömungsrichtung des Mediums in Richtung 10 (in Richtung zu einem nicht gezeigten Vorratsbehälter) gekennzeichnet. Dabei ist das Ventil, zum Beispiel gekapselt - beispielsweise innerhalb eines Getriebes - vorgesehen, so dass das Öl nicht ausläuft, sondern vollständig in dem Getriebe oder in einem Gehäuse verbleibt.

In der Fig. 1b ist eine Ansicht aus Richtung der Strömungsrichtung a (also von der Fig. 1a aus gesehen von unten) gezeigt. Dabei sind hier lediglich die Kanalbereiche 50-54 schematisch dargestellt. Die Kanalbereiche 50-53 umgeben dabei schaufelartig den zentralen Kanalbereich 54 und sind insbesondere in ihrer Längserstreckung nach oben beziehungsweise in Medienflussrichtung a zum Beispiel schraubenförmig gestaltet. Damit gelingt es, die gewünschte Drallrichtung beziehungsweise Drallströmung des Mediums zu erhalten. Im Zentrum der Stromführungseinrichtung 5 befindet sich ein weiterer zentraler Kanalbereich 54, der dazu vorgesehen ist, zum einen auch Medium zu führen, zum anderen aber das als Kugel ausgebildete Schließelement 3 zu führen und zwar derart, dass es nicht aus dem Kanalbereich 54 herausgleiten kann. Dazu dient insbesondere auch ein als Verschlussstopfen oder Kegel oder dergleichen ausgebildetes Verschlusselement, das in der Fig. 1a mit dem Bezugszeichen 8 bezeichnet ist. Dieses wird nach Einführung des Schließelementes 3 in den Kanalbereich 54 sozusagen als Abschlusselement 8 eingeführt beziehungsweise aufgesetzt. Dadurch kann das Schließelement 3 nicht mehr aus dem Kanalbereich 54 gleiten. Dadurch, dass es auch nicht in die Kanalbereiche 50-53 fallen beziehungsweise gleiten kann, bleibt das Schließelement 3 immer in diesem Kanalbereich 54 - ist also auch im drucklosen Zustand des Ventils sicher geführt. Das Abschlusselement 8 dient auch dazu, den Durchfluss des Mediums in axialer Richtung des Ventils zu verhindern. Die schraubenförmige Bewegung des Mediums bildet sich dabei bevorzugt innerhalb des Kanalbereichs 54, inbesondere innerhalb des Pferchkreises 180, das heißt, der Durchmesser des schraubenbahnähnlichen Dralls ist kleiner wie der Durchmesser des Pferchkreises 180.

Das Verschlusselement 8 der Stromführungseinrichtung 5 kann dabei Bestandteil eines hier nicht dargestellten seperaten Verschlusskorbes sein, der gleichzeitig mit einem Sieb oder Filtereinrichtung verbunden ist, die verhindert, dass im Medium vorhandene Verunreinigungen, wie beispielsweise kleinere Stahl- oder Metallspäne in den Bereich des Ventilsitzes 20 gelangen können. Damit wird verhindert, dass diese Verunreinigungen das Ventil beschädigen beziehungsweise zu einem früheren Verschleiß führen. Die Ausgestaltung des Verschlusselementes 8 ist dabei äußerst vielfältig zu sehen. So kann es beispielsweise als Kegel, Stift oder auch als kugelförmiger Abschluss vorgesehen sein, der den zentralen Kanalbereich 54 verschließt. Die Stromführungseinrichtung 5 kann nach der Erfindung entweder einstückig mit dem bereits beschriebenen Filter beziehungsweise Siebkorb verbunden sein. Nach der Erfindung ist allerdings auch eine zweistückige Ausgestaltung möglich. Wie bereits erwähnt, hat die Erfindung den Vorteil, dass der Drallgeber beziehungsweise die Stromführungseinrichtung 5 sich in der ersten Stufe des Ventils, also am ersten Sitzventil 1 befindet.

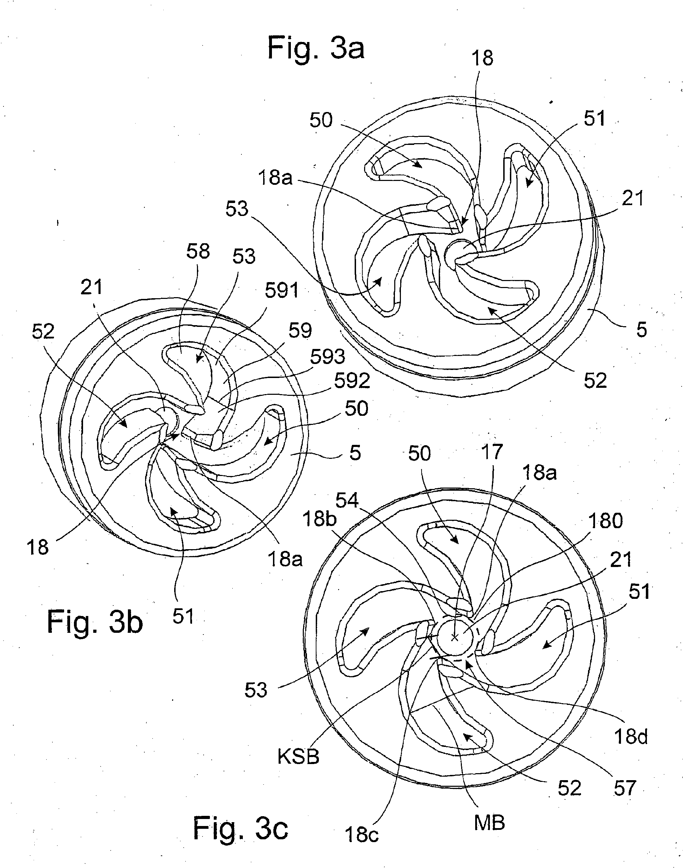

Das Ziel der erfindungsgemäßen Ausgestaltung ist, dass in dem durchströmenden Medium eine schraubenartige Bewegungskomponente eingeprägt wird. Der in Achsrichtung (in Richtung der Mittelachse 17) im Einlaufbereich 6 einströmende Medienstrom erhält dabei eine entsprechende zusätzliche Bewegungskomponente, die durch eine geschickte Ausgestaltung der Kanalbereiche 50,51,52,53 wie zum Beispiel in Fig. 3a, 3b und 3c (dies ist ähnlich Fig. 1b) gezeigt ist. So ist zum Beispiel insbesondere in Fig. 3a gut zu sehen (zum Beispiel im Kanalbereich 53), dass die in Draufsicht schaufelradartige Ausgestaltung, kombiniert mit einer bezüglich der Mittelachse 17 zum Beispiel auf einer Kegelmantelfläche liegenden Kanalboden 58 zu einem spiralförmigen Verlauf des Kanalbodens 58 beiträgt und so das Zusammenwirken der den Kanalbereich 50, 51, 52, 53 seitlich begrenzende Kanalwände 59 mit dem gewendelten Kanalboden 58 eine sehr effektive Umlenkung des Medienstroms bewirkt.

Beispielsweise wird als Medium zum Beispiel Getriebeöl oder sonstige hydraulische Flüssigkeiten, die als Medium einsetzbar sind in eine derartige Drall- beziehungsweise Rotations- oder Schraubenbewegung umgelenkt, so dass erhebliche Bewegungsanteile in rotativer beziehungsweise tangentialer Richtung zur Blende 21 des (ersten) Sitzventils 1 orientiert sind.

Für eine höchst effiziente Ausgestaltung der Kanalbereiche 50, 51, 52, 53 wurde gefunden, dass diese in Draufsicht gesehen zum Beispiel turbinenartig gebildet sind. In dem hier gezeigten Ausführungsbeispiel sind vier jeweils gleich große - bezogen auf die Mittelachse, beziehungsweise Mittelpunkt 17 äquidistant ausgebildete - Kanalbereiche 50-53 vorgesehen. Sie zeichnen sich dadurch aus, dass der (mittlere) Radius der inneren Kanalwand 59i deutlich größer ist als der (mittlere) Radius der äußeren Kanalwand 59a. Die Bezeichnung "innere" beziehungsweise "äußere" leitet sich dabei von dem bewegten System des strömenden Mediums ab, das durch die äußere Kanalwand 59a geführt und abgelenkt wird. Die äußere Kanalwand 59a eines Kanalbereiches 50 bis 53 ist dabei deutlich länger wie die innere Kanalwand 59i einer Kanalwand. In Fig. 1b ist mit 590 die Verlängerung einer äußeren Kanalwand 59a des Kanalbereichs 52 gezeigt. Die Anordnung ist so, dass diese Verlängerung 590 tangential zum Dichtrand 22 beziehungsweise Ventilsitz 20, und daher auch zu dem runden beziehungsweise kugelförmigen, losen Schließelement 3 verläuft.

Mit MA ist der maximale Abstand zwischen der Mittelachse/Mittelpunkt 17 (beschreibt zum Beispiel auch den Mittelpunkt des kreisrunden Ventilsitzes 20) und dem am weitesten hiervon entferntesten Bereich 59' der Kanalwand. In einer bevorzugten Ausgestaltung der Erfindung beträgt das Verhältnis dieses maximalen Abstandes zur lichten Weite des Sitzventiles 1 (zum Beispiel des Blendendurchmessers der Blende 21) mindestens den dimensionslosen Wert 2, bevorzugt mindestens 3, insbesondere mindestens 4, vorteilhafter Weise mindestens 5 beträgt. Je größer dieses Verhältnis ist, umso effektiver und strömungsärmer ist es möglich, den Medienstrom entsprechend abzulenken.

Der zentrale Kanalbereich 54 (vergleiche Fig. 1b) dient insbesondere der (halb-)käfigartigen Führung des lose angeordneten Schließelementes 3 und stellt sicher, dass dieses nicht im Ventil 19 verloren geht. Komplettiert wird der Käfig durch das Verschlusselement 8, das an der Einlaufseite 6 der Stromführungsrichtung 5 angeordnet ist. Dieser zentrale Kanalbereich 54 wird daher begrenzt von einer Führungsanordnung 18, die ihrerseits gebildet ist aus dem radial zum Ventilsitz 20 beziehungsweise dessen Mittelachse/ Mittelpunkt 17 am nächsten liegenden Bereichen 18a, 18b, 18c, 18d der Kanalwände 59. Bevorzugter Weise liegen diese Bereiche gemeinsam auf einem Pferchkreis 180. Dies ist zum Beispiel in Fig. 3c sowie in Fig. 1b ersichtlich.

In Fig. 3b ist gut zu erkennen, dass die Kanalwand 59 auch aus mehreren Kanalwandbereichen 591, 592 mit unterschiedlichen Biegeradien besteht, die an einer Verbindungskante 593 zusammenstoßen. So kann zum Beispiel der Krümmungsradius für das einströmende Medium entsprechend variiert und angepasst werden.

In Fig. 3c ist mit MB die maximale Kanalbreite, das heißt, der Abstand zwischen der inneren Kanalwand 59i zur äußeren Kanalwand 59a eines Kanalbereiches gekennzeichnet. Zunächst ist diese maximale Kanalbreite MB kleiner als der Durchmesser des losen Schließelementes 3, um zu vermeiden, dass das Schließelement 3 aus seiner Position vor dem Ventilsitz 20 nachhaltig verloren geht. Es ist aber auch vorgesehen, dass das Verhältnis des kürzesten Abstandes von innerer (59i) zu äußerer (59a) Kanalwand zu der maximalen Kanalbreite MB im Kanalbereich 50-53 mindestens den Wert 1,5, bevorzugt mindestens 2, insbesondere mehr als 3 beträgt.

Am Kanalspalt 57 münden die jeweiligen Kanalbereiche 50-53 in den zentralen Kanalbereich 54. Die Kanalspaltbreite KSB, die sich zum Beispiel auch zwischen den Bereichen 18a, 18b, 18c, 18d der Kanalwand 59 mit kürzestem Abstand zum Mittelpunkt 17 erstrecken kann, beträgt maximal bis zu 50%, bevorzugt bis zu 45% oder 40%, insbesondere bevorzugt bis zu 35%, 30% oder 25% des Durchmessers des Ventilsitzes 20 oder des Durchmessers des Schließelementes 3.

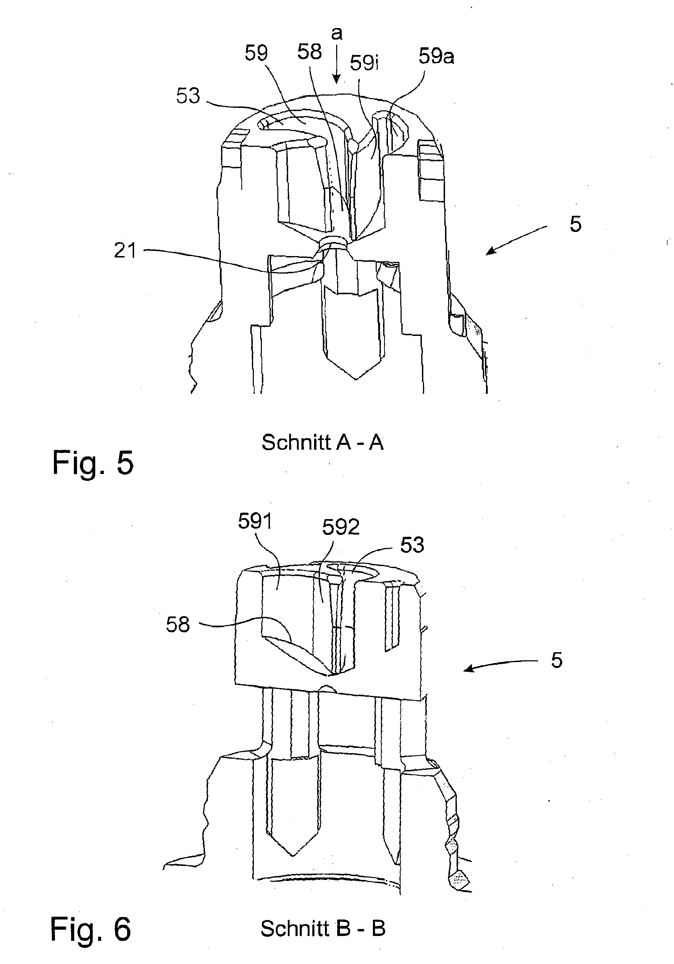

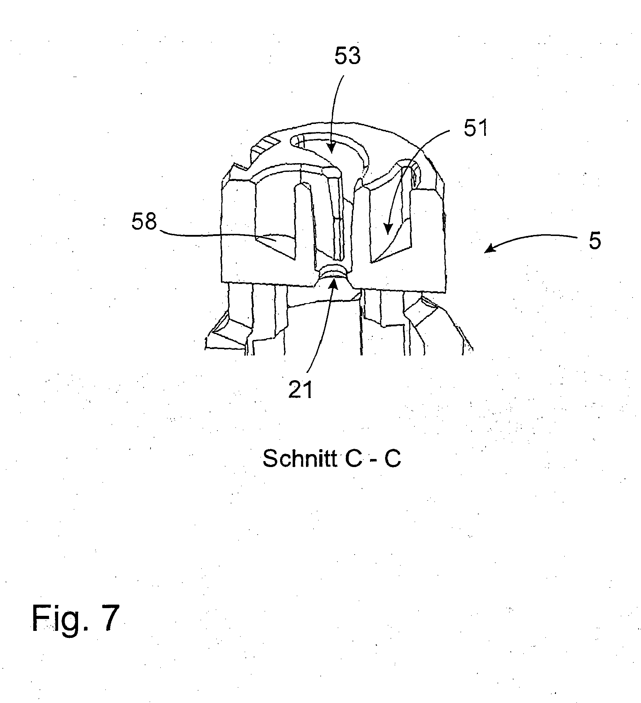

In Fig. 5, 6 und 7 sind verschiedene, in dreidimensionaler Ansicht ausgeführte Schnitte durch die Stromführungseinrichtung 5 gemäß der Erfindung gezeigt. Insbesondere ist der wendelbogenartige Verlauf des Kanalbodens 58 sehr gut zu sehen.

Die in Fig. 5, 6 und 7 gezeigte Anordnung ist verglichen mit der in Fig. 1a gezeigten Anordnung um 180° gedreht. Das Medium würde nach Fig. 5, 6 und 7 von oben in den Einlaufbereich 6 in Richtung des Auslaufbereiches 7 mit der Blende 21 strömen - dies ist mit dem nach unten weisenden Pfeil a in Fig. 5 angedeutet.

Fig. 1c, 1d und 1e zeigen je in einer vergrößerten Schnittdarstellung die speziellen Varianten für die Ausgestaltung des ersten Sitzventiles 1.

Wie bereits ausgeführt ist es erfindungsgemäß gleichwertig, ob das Sitzventil 1 von der Stromführungseinrichtung 5 getrennt oder integriert (gemeinsam) ausgeführt ist. Insbesondere kann zum Beispiel der Ventilsitz 20 des Sitzventils 1 als Teil der Stromführungseinrichtung 5 oder hiervon unabhängig ausgebildet sein.

Das Sitzventil 1 besteht in der Regel aus einem Ventilsitz 20, auf welchem in geschlossener Stellung des Sitzventils 1 das lose Schließelement 3, hier zum Beispiel eine Kugel oder Schließkugel, ruht. In dem hier gezeigten Ausführungsbeispiel wird das lose, also nicht von einer Betätigungsstange 4 gehaltene beziehungsweise auf der Betätigungsstange 4 fixierte Schließelement 3 durch den im Zulaufbereich 2 herrschenden Mediendruck (in Strömungsrichtung a) auf den Ventilsitz 20 gedrückt.

Die in Fig. 1c, 1d, 1e gezeigten verschiedenen varianten sind keine abschließende Aufzählung der verschiedenen möglichen Bauformen des Sitzventiles 1 gemäß der Erfindung. Sie dienen aber zur Erläuterung der wesentlichen Verhältnisse in diesem Bereich der erfindungsgemäßen Konstruktion.

Die Schließkugel, welche als loses Schließelement 3 auf dem Ventilsitz 20 ruht, verschließt die Blende 21, welche das Medium (die Strömungsrichtung des Mediums ist hier mit dem Pfeil a gekennzeichnet) freigibt. Nicht gezeigt ist der Teil der Betätigungsstange 4, der das Schließelement 3 entgegen dem Strömungsdruck beziehungsweise die Strömungsrichtung a des Mediums die Schließkugel beziehungsweise das Schließelement 3 vom Ventilsitz 20 abhebend beziehungsweise freigebend anstellt und so die Blende 21 öffnet.

Seitlich neben der Blende 21 erstreckt sich der Kanalboden 58, der, wie in den Fig. 1c, 1d, 1e ausgeführt, unterschiedlichst gestaltet sein mag.

Ein Pfiff der Erfindung liegt darin, dass die Ausgestaltung der Kanalbereiche 50 bis 53, insbesondere des die Kanalbereiche 50 bis 53 begrenzenden Kanalbodens 58 beziehungsweise der Kanalwände 59 so geschickt gewählt sind, dass sich zumindest auf Höhe des Schließelementes 3 insbesondere im zentralen Kanalbereich 54 ein im wesentlichen laminarer, aber schraubenähnlicher Mediumsstrom ergibt, der, wie eingangs beschrieben, das Schaltverhalten und auch die Schwingungsstabilität solcher Ventile erheblich positiv beeinflusst.

Mit der gestrichelten Linie 23 ist in den Fig. 1c, 1d und 1e je eine Ventilebene 23 definiert. Die Ventilebene 23 nimmt dabei den Ventilsitz 20 auf. Der Ventilsitz 20 wird insbesondere bei dem Zusammenwirken mit einem kugelförmigen Schließelement 3 einen kreis- oder ringförmigen Dichtrand 22 gebildet. Dieser Dichtrand 22 ist ein Element der Ventilebene 23.

In dem in Fig. 1c gezeigten Ausführungsbeispiel ist seitlich neben der Blende 21 zunächst eine erste Kanalbodenteilfläche 58b vorgesehen, die parallel zur Ventilebene 23 verläuft, in diesem speziellen Beispiel sogar mit dieser zusammenfällt. Nach diesem kurzen parallelen Stück schließt sich dann ein hierzu abgewinkelter Kanalbodenteil 58a an, wobei dieser Bereich zum Beispiel als Kegel oder als schräge Fläche ausgebildet ist. In der hier in Fig. 1c, 1d und 1e gezeigten Ausgestaltung wird diese geneigte Kanalbodenteilfläche 58a beziehungsweise der Kanalboden 58 (in Fig. 1d beziehungsweise Fig. 1e) zur Erläuterung der geometrischen Verhältnisse vereinfacht durch die Kanalbodenebene 580 beschrieben, die zumindest teilweise Teil dieses Kanalbodens ist oder zum Beispiel einer kegelartigen Ausgestaltung des Kanalbodens 58 tangential an einer Kegelmantellinie aufnimmt. In der vereinfachten zeichnerischen, zweidimensionalen Darstellung erscheint die kegelartige Ausgestaltung des Kanalbodens 58 als geneigte Fläche. Die gewählte Darstellung erlaubt daher sowohl die Erläuterung eines kegel(stumpf-)artigen Kanalbodens 58 (also einer gewölbten Fläche) wie auch einer geneigten, in sich aber ebenen, also gleichgerichteten Fläche. Dadurch ist es möglich, den Kanalboden beziehungsweise die geneigten Kanalbodenbereiche 58, 58a, im Hinblick auf das Sitzventil 1 zu beschreiben. Nach einer bevorzugten Ausgestaltung der Erfindung ist dabei vorgesehen, dass die Kanalbodenebene 580 mit der den Dichtrand 22 des Sitzventiles 1 aufnehmenden Ventilebene 23 einen spitzen Winkel α, bevorzugt von 5 Grad bis 85 Grad, insbesondere von 15 Grad bis 75 Grad, insbesondere bevorzugt von 20 Grad bis 40 Grad, einschließt. Gute Ergebnisse im Hinblick auf Schwingungsstabilität wurden zum Beispiel bei einem Winkel α von 30°±5° erreicht. Es ist aber auch möglich, den Winkel α bei 40 Grad, 50°, 60° oder 70° anzuordnen, jeweils mit einem entsprechenden Intervall von +10°.

Es ist klar, dass sich das Schließelement 3 im Auslaufbereich 7 der Stromführungseinrichtung 5 befindet.

Im Gegensatz zu der Variante nach Fig. 1c zeigt Fig. 1d die Variante, dass der (geneigte) beziehungsweise kegelförmige Kanalboden 58 direkt trichter- oder teiltrichterartig in den Ventilsitz 20 mündet, also an die Begrenzungswand 24 der Blende 21 anschließt. Der Dichtrand 22, der idealerweise eine Linie ist, wird dann gerade durch diesen Knick, in welchem die Begrenzungswand 24 der Blende 21 in den geneigten beziehungsweise hier auch kegelförmigen Kanalboden 58 übergeht, beschrieben. Auch hier wird idealerweise der Kanalboden 58 durch die Kanalbodenebene 580 beschrieben und ist in dem hier gezeigten Ausführungsbeispiel als kegelartiger Hilfskörper zu verstehen.

In Fig. 1e ist die Anordnung so gewählt, dass die Begrenzungswand 24 der Blende 21 in einer Rundung 58c in den schräg oder kegelig verlaufenden Kanalboden 58 übergeht. Anstelle der Kante oder des Knicks nach Fig. 1d ist hier ein eher stetiger Übergang gezeigt. Die Anordnung ist insgesamt zum Beispiel trichterartig, es bildet sich wiederum ein genau definierter Dichtrand 22 aus, der den Ventilsitz 20 und somit auch die Ventilebene 23 definiert.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausfüh-rungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden, oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Ventil, insbesondere Druckregelventil, bestehend aus einem in Strömungsrichtung (a) des Mediums vor einem Sitzventil (1) vorgesehenen Zulaufbereich (2), wobei das Sitzventil (1) von einem im Zulaufbereich (2) vorgesehenen, losen Schließelement (3) verschließbar ist, wobei eine von einem Stangenantrieb bewegbare Betätigungsstange (4) das Schließelement (3) gegen die Strömungsrichtung (a) des Mediums im Bezug auf den Ventilsitz (20) des Sitzventiles (1) anstellt, **dadurch gekennzeichnet, dass** im Zulaufbereich (2) eine Stromführungseinrichtung (5) vorgesehen ist und die Stromführungseinrichtung (5) mit einem Einlaufbereich (6) und einen in Strömungsrichtung (a) des Mediums dazu beabstandeten Auslaufbereich (7) zur definierten Strömungsführung von in den Einlaufbereich (6) einströmendem Medium vorgesehen ist, wobei die Stromführungseinrichtung (5) mindestens einen Kanalbereich (50,51,52,53) aufweist, der von mindestens einer Kanalwand (59) und einer zum Ventilsitz (20) hin kegelartig, kegelsegmentartig oder schräg abfallenden Kanalboden (58) begrenzt ist und das durch den mindestens einen Kanalbereich (50, 51, 52, 53) strömende Medium zumindest teilweise in einen schraubenbahnähnlichen Drall versetzt.

2. Ventil nach Anspruch 1, **dadurch gekennzeichnet, dass** die Stromführungseinrichtung (5) das Medium derart umlenkt, dass das Medium das Schließelement (3) im wesentlichen tangential abströmt.

3. Ventil nach Anspruch 1 oder 2, **dadurch gekennzeichnet, dass** die Stromführungseinrichtung (5) das Medium derart umlenkt, dass sich der schraubenähnliche Drall des Mediums insbesondere im Bereich des Sitzventiles (1) ausbildet.

4. Ventil nach einem der vorhergehenden Ansprüche, **dadurch gekennzeichnet, dass** die den Kanalboden (58) zumindest teilweise aufnehmende Kanalbodenebene (580) mit der den Dichtrand (22) des Sitzventil (1) aufnehmenden Ventilebene (23) einen spitzen Winkel α, bevorzugt von 5° bis 85°, insbesondere von 15° bis 75°, besonders bevorzugt von 20° bis 40° einschließt.

5. Ventil nach einem der vorhergehenden Ansprüche, **dadurch gekennzeichnet, dass** der Kanalboden (58) aus mindestens zwei unterschiedlich geneigten Kanalbodenteilflächen (58a,58b) gebildet ist, oder die Kanalbodenfläche, beziehungsweise Kanalbodenteilfläche (58c) gewölbt, insbesondere konkav gewölbt ist.

6. Ventil nach einem der vorhergehenden Ansprüche, **dadurch gekennzeichnet, dass** die Kanalwand (59) mit der Ventilebene (23) einen im wesentlichen rechten Winkel oder einen Winkel zwischen 75° und 90° einschließt.

7. Ventil nach einem der vorhergehenden Ansprüche, **dadurch gekennzeichnet, dass** zumindest ein Teil der Kanalwand (59) die Mantelfläche eines Zylinders oder Prismas mit elliptischer Grundfläche beschreibt oder die Kanalwand (59) aus Bereichen (591, 592) mit unterschiedlichen Krümmungsradien besteht.

8. Ventil nach einem der vorhergehenden Ansprüche, **dadurch gekennzeichnet, dass** der Kanalbereich (50, 51, 52, 53) eine innere (59i) und eine äußere (59a), insbesondere zumindest teilweise gebogene Kanalwand aufweist und das Verhältnis der jeweiligen Biegeradien von innerer Kanalwand (59i) zur äußeren Kanalwand (59a) im Bereich von 1,1 bis 2,5, bevorzugt von 1,2 bis 1,6, insbesondere bevorzugt von 1,2 bis 1,4 oder mehr als 1,2 beziehungsweise 1,3 beträgt und/oder sich der mindestens eine Kanalbereich (50, 51, 52, 53) bezüglich des Sitzventils (1) radial nach Außen erstreckt und/oder die einzelnen Kanalbereiche (50, 51, 52, 53) jeweils gleiche Strömungsquerschnitte (5) aufweisen.

9. Ventil nach einem der vorhergehenden Ansprüche, **dadurch gekennzeichnet, dass** die Strömungsführungseinrichtung (5) eine zumindest halbkäfigartige Führungsanordnung (18) für das lose angeordnete Schließelement (3) aufweist, wobei insbesondere die Führungsanordnung (18) gebildet ist aus dem radial dem Ventilsitz (20) am nächsten liegenden Bereichen ( 18a, 18b, 18c, 18d) der Kanalwände (59), wobei diese Bereiche gemeinsam auf einem Pferchkreis (180) liegen und/oder die Stromführungseinrichtung (5) zwei, drei, vier, fünf, sechs oder noch mehr, äquidistant angeordneter Kanalbereiche (50, 51, 52, 53) aufweist.

10. Ventil nach einem der vorhergehenden Ansprüche, **dadurch gekennzeichnet, dass** eine Verlängerung (590) der Kanalwand (59) tangential in den Ventilsitz (20) beziehungsweise das Schließelement (3) mündet.

11. Ventil nach einem der vorhergehenden Ansprüche, **dadurch gekennzeichnet, dass** die maximale Kanalbreite (MB) des Kanalbereiches (50, 51, 52, 53) kleiner ist als der Durchmesser des Schließelementes (3) und/oder der Kanalbereich (50, 51, 52, 53) in Richtung des Ventilsitzes (20) einen Kanalspalt (57) aufweist und die Kanalspaltbreite (KSB) maximal bis zu 50%, bevorzugt bis zu 35%, insbesondere bis zu 25% des Durchmessers des Ventilsitzes (20) oder des Durchmessers des Schließelementes (3) beträgt.

12. Ventil nach einem der vorhergehenden Ansprüche, **dadurch gekennzeichnet, dass** das Verhältnis des maximalen Abstandes (MA) eines Bereiches der Kanalwand (59') zum Mittelpunkt beziehungsweise Mittelachse 17 des Sitzventils (1) zur lichten weite des Sitzventiles (1) mindestens 2, bevorzugt mindestens 3, insbesondere mindestens 4, vorteilhafterweise mindestens 5 beträgt.

13. Ventil nach einem der vorhergehenden Ansprüche, **dadurch gekennzeichnet, dass** das Verhältnis des kürzesten Abstandes von innerer (59i) zur äußeren Kanalwand (59a) zu der maximalen Kanalbreite (MB) im Kanalbereich (50, 51, 52, 53) mindestens 1,5, bevorzugt mindestens 2, insbesondern mehr als 3 beträgt und/ oder das Verhältnis des Durchmessers des Pferchkreises (180) zur lichten Weite des Ventilsitzes (20) im Bereich von 1,1 bis 2, bevorzugt von 1,15 bis 1,5, insbesondere von 1,2 bis 1,4 beziehungsweise 1,3 bis 1,4 liegt.

14. Ventil nach einem der vorhergehenden Ansprüche, **dadurch gekennzeichnet, dass** als Schließelement (3) eine Schließkugel vorgesehen ist und/oder das Verhältnis des Durchmessers des Schließelementes (3) beziehungsweise der Schließkugel zur lichten Weite des Ventilsitzes (20) zwischen 1,04 und 1,5, bevorzugt zwischen 1,1 und 1,4, insbesondere bevorzugt zwischen 1,15 und 1,30 beträgt.

15. Ventil nach einem der vorhergehenden Ansprüche **dadurch gekennzeichnet, dass** als Stangenantrieb ein Elektromagnet vorgesehen ist, wobei der Anker des Elektromagneten auf die Betätigungsstange (4) wirkt und/oder in Strömungsrichtung (a) des Mediums nach dem von dem losen Schließelement (3) verschließbaren Sitzventil (1) ein weiteres zweites Sitzventil (15) vorgesehen ist.

## Claims

1. Valve, in particular pressure control valve, consisting of a feed area (2) provided in flow direction (a) of the medium in front of a globe valve (1), wherein the globe valve (1) can be closed by a loose closing element (3) provided in the feed area (2), wherein an activating rod (4) movable by a rod drive angles the closing element (3) against the flow direction (a) of the medium with respect to the valve seat (20) of the globe valve (1), **characterized in that** in the feed area (2) a flow guiding device (5) is provided, and the flow guiding device (5) is provided with an inlet area (6) and a discharge area (7) spaced thereto in flow direction (a) of the medium for a defined guide of the flow of medium flowing in the inlet area (6), wherein the flow guiding device (5) has at least one channel area (50, 51, 52, 53) delimited by at least a channel wall (59) and a channel bottom (58) sloping either cone-like, cone segment-like or diagonally towards the valve seat (20), and setting the medium flowing through the at least one channel area (50, 51, 52, 53) at least partly in a helical-like twist.

2. Valve according to claim 1, **characterized in that** the flow guiding device (5) diverts the medium such that the medium approaches the closing element (3) essentially tangentially.

3. Valve according to claim 1 or 2, **characterized in that** the flow guiding device (5) diverts the medium such that the helical-like twist of the medium occurs in particular in the area of the globe valve (1).

4. Valve according to one of the preceding claims, **characterized in that** the channel bottom plane (580) receiving the channel bottom (58) at least partly and the valve plane (23) receiving the sealing edge (22) of the globe valve (1) cover an acute angle α, preferably of 5° to 85°, in particular 15° to 75°, in particular preferred 20° to 40°.

5. Valve according to one of the preceding claims, **characterized in that** the channel bottom (58) is formed of at least two differently inclined partial channel bottom surfaces (58a, 58b), or the surface of the channel bottom and/or the partial surface of the channel bottom (58c) is arched, in particular concavely arched.

6. Valve according to one of the preceding claims, **characterized in that** the channel wall (59) along with the valve plane (23) covers an essentially right angle or an angle between 75° and 90°.

7. Valve according to one of the preceding claims, **characterized in that** at least a part of the channel wall (59) is shaped like the outside surface of a cylinder or prism with elliptic base, or the channel wall (59) consists of areas (591, 592) having different bending radii.

8. Valve according to one of the preceding claims, **characterized in that** the channel area (50, 51, 52, 53) has an interior (59i) and an exterior (59a), in particular an at least partly curved channel wall, and the ratio of the respective bending radii of interior channel wall (59i) to exterior channel wall (59a) is in the area of 1.1 to 2.5, preferably 1.2 to 1.6, in particular preferred from 1.2 to 1.4 or more than 1.2 or 1.3, and/or the at least one channel area (50, 51, 52, 53) extends radially outwards with respect to the globe valve (1), and/or the single channel areas (50, 51, 52, 53) each having identical flow cross sections (5).

9. Valve according to one of the preceding claims, **characterized in that** the flow guiding device (5) has an at least semi cage-like guiding arrangement (18) for the loosely arranged closing element (3), wherein in particular the guiding arrangement (18) is formed by the areas (18a, 18b, 18c, 18d) of the channel walls (59) located radially next to the valve seat (20), wherein these areas are located commonly on a maximum inscribed circle (180), and/or the flow guiding device (5) has two, three, four, five, six, or even more channel areas (50, 51, 52, 53) arranged equidistantly.

10. Valve according to one of the preceding claims, **characterized in that** an elongation (590) of the channel wall (59) flows tangentially into the valve seat (20) or the closing element (3).

11. Valve according to one of the preceding claims, **characterized in that** the maximum channel width (MB) of the channel area (50, 51, 52, 53) is less than the diameter of the closing element (3), and/or the channel area (50, 51, 52, 53) has a channel gap (57) in the direction of the valve seat (20), and the channel gap width (KSB) is at most up to 50%, preferably up to 35%, in particular up to 25% of the diameter of the valve seat (20) or the diameter of the closing element (3).

12. Valve according to one of the preceding claims, **characterized in that** the ratio of the maximum distance (MA) of an area of the channel wall (59') to the center point or center axis (17) of the globe valve (1) to the inside dimension of the globe valve (1) is at least 2, preferably at least 3, in particular at least 4, advantageously at least 5.

13. Valve according to one of the preceding claims, **characterized in that** the ratio of the shortest distance of interior (59i) to exterior (59a) channel wall to the maximum channel width (MB) in the channel area (50, 51, 52, 53) is at least 1.5, preferably at least 2, in particular more than 3, and/or the ratio of the diameter of the maximum inscribed circle (180) to the inside dimension of the valve seat (20) is in the range of 1.1 to 2, preferably 1.15 to 1.5, in particular 1.2 to 1.4, or 1.3 to 1.4.

14. Valve according to one of the preceding claims, **characterized in that** a closing ball is provided as closing element (3), and/or the ratio of the diameter of the closing element (3) or the closing ball to the inside dimension of the valve seat (20) is between 1.04 and 1.5, preferably between 1.1 and 1.4, in particular preferably between 1.15 and 1.30.

15. Valve according to one of the preceding claims, **characterized in that** a solenoid is provided as rod drive, wherein the armature of the solenoid acts on the activation rod (4), and/or in the flow direction (a) of the medium after the globe valve (1) that can be closed by the loose closing element (3) another, second globe valve (15) is provided.

## Revendications

1. Soupape, en particulier soupape de régulation de pression, consistant en une zone d'arrivée (2) située selon la direction du courant (a) du médium en amont d'une soupape à siège (1) laquelle soupape à siège (1) peut être fermée par un élément de fermeture mobile (3) situé dans la zone d'arrivée (2) de façon à ce qu'une tige d'actionnement (4) mise en mouvement par une tige de commande déplace l'élément de fermeture (3) contre la direction du courant (a) du médium par rapport au siège (20) de la soupape à siège (1), **caractérisée en ce qu'**un dispositif de guidage de courant (5) est prévu au niveau de la zone d'arrivée (2) et **en ce que** ce dispositif de guidage de courant (5) est muni d'une zone d'arrivée (6) et d'une zone de sortie (7) en aval et distante de la zone d'arrivée selon la direction du courant (a) afin de permettre un guidage défini du courant du médium entrant par la zone d'arrivée (6) et de façon à ce que le dispositif de guidage de courant (5) comporte au moins une zone de canal (50, 51, 52, 53) limitée par au moins une parois de canal (59) et un fond de canal (58) penchant vers le bas en direction du siège de soupape (20) selon une forme conique, partiellement conique ou selon une pente et **en ce que** le medium parcourant la ou les zone (s) de canal (50,51,52,53) est mis en un mouvement approximativement hélicoïdal.

2. Soupape selon la revendication 1, **caractérisée en ce que** le dispositif de guidage de courant (5) dévie le médium de façon à ce que le médium est projeté approximativement tangentiellement contre l'élément de fermeture (3).

3. Soupape selon les revendications 1 ou 2, **caractérisée en ce que** le dispositif de guidage de courant (5) dévie le médium de façon à ce que le mouvement approximativement hélicoïdal est créé en particulier à proximité de la soupape à siège (1).

4. Soupape selon une des revendications précédentes, **caractérisée en ce que** le plan du fond de canal (59) formant au moins partiellement le fond de canal (58) et le plan de soupape (23) formant le bord d'étanchéité (22) de la soupape à siège (1) enferment un angle aigu α allant de préférence de 5° à 85° et en particulier de 15° à 75° et en particulier de préférence de 20° à 40°.

5. Soupape selon une des revendications précédentes, **caractérisée en ce que** le fond de canal (58) est formé d'au moins deux surfaces partielles de fond de canal (58a, 58b) de pentes différentes ou **en ce que** la surface de fond de canal ou la surface partielle de fond de canal (58c) est courbée et en particulier concave.

6. Soupape selon une des revendications précédentes, **caractérisée en ce que** la paroi de canal (59) forme avec le plan de soupape (23) un angle approximativement droit ou un angle allant de 75° et 90°.

7. Soupape selon une des revendications précédentes, **caractérisée en ce qu'**au moins une partie de la paroi de canal (59) décrit une surface d'un cylindre ou d'un prisme d'une surface de fond elliptique ou **en ce que** la paroi de canal (59) consiste en des zones de différents rayons de courbure.

8. Soupape selon une des revendications précédentes, **caractérisée en ce que** la zone de canal (50, 51, 52, 53) possède une paroi intérieure (59i) et une paroi extérieure (59a), les deux étant en particulier au moins partiellement courbées et avec un rapport entre le rayon de courbure de la paroi intérieure (59i) et le rayon de courbure de la paroi extérieure (59a) allant de 1,1 à 2,5, de préférence de 1,2 à 1,6 et en particulier de préférence de 1,2 à 1,4 ou plus de 1,2, voire 1,3 et/ou **en ce que** la ou les zone(s) de canal (50, 51, 52, 53) s'étende(nt) radialement vers l'extérieur par rapport à la soupape à siège (1) et/ou **en ce que** les zones de canal individuelles (50, 51, 52, 53) comportent chacune une section transversale identique (5) .

9. Soupape selon une des revendications précédentes, **caractérisée en ce que** le dispositif de guidage de courant (5) comporte un dispositif de guidage (18) en forme de cage au moins semi-fermée, destiné à retenir l'élément de fermeture mobile (3) et **en ce que** le dispositif de guidage (18) est formé par les zones (18a, 18b, 18c, 18d) des parois (59) situées le plus près selon la direction radiale du siège de soupape (20) et **en ce que** ces zones sont situées ensemble sur un cercle enveloppant (180) et/ou **en ce que** les dispositifs de guidage de courant (5) comportent deux, trois, quatre, cinq , six voire plus de zones de canal (50, 51, 52, 53) équidistantes.

10. Soupape selon une des revendications précédentes, **caractérisée en ce qu'**un prolongement (590) de la paroi de canal (59) conduit tangentiellement dans le siège de soupape (20) ou l'élément de fermeture (3).

11. Soupape selon une des revendications précédents, **caractérisée en ce que** la largeur maximale de canal (MB) de la zone de canal (50, 51, 52, 53) est inférieure au diamètre de l'élément de fermeture (3) et/ou **en ce que** la zone de canal (50, 51, 52, 53) possède en direction du siège de soupape (20) une fente de canal (57) et cette fente de canal (57) possède une largeur de canal (KSB) maximale jusqu'à 50%, de préférence jusqu'à 35% et en particulier jusqu'à 25% du diamètre du siège de soupape (20) ou du diamètre de l'élément de fermeture (3).

12. Soupape selon une des revendications précédentes, **caractérisée en ce que** le rapport entre la distance maximale (MA) entre une zone de la paroi de canal (59') et le point central ou l'axe central (17) de la soupape à siège (1) et l'ouverture interne minimale de la soupape à siège (1) est d'au moins 2, de préférence au moins 3, en particulier au moins 4 et avantageusement au moins 5.

13. Soupape selon une des revendications précédentes, **caractérisée en ce que** le rapport entre la distance la plus courte entre la paroi de canal intérieure (59i) et la paroi de canal extérieure (59a) et la largeur maximale de canal (MB) dans la zone de canal (50, 51, 52, 53) est au moins 1,5, de préférence au moins 2, en particulier plus de 3 et/ou **en ce que** le rapport entre le diamètre du cercle enveloppant (180) et l'ouverture interne minimale du siège de soupape (20) va de 1,1 à 2, de préférence de 1,15 à 1,5, en particulier de 1,2 à 1,4 ou de 1,3 à 1,4.

14. Soupape selon une des revendications précédentes, **caractérisée en ce qu'**une bille de fermeture est prévue comme élément de fermeture (3) et/ou **en ce que** le rapport entre le diamètre de l'élément de fermeture (3) ou la bille de fermeture et l'ouverture interne minimale du siège de soupape (20) est situé entre 1,04 et 1,5, de préférence entre 1,1 et 1,4 et en particulier et de préférence entre 1,15 et 1,30.

15. Soupape selon une des revendications précédentes, **caractérisée en ce qu'**un aimant électrique est prévu comme commande de tige dont le noyau mobile agit sur la tige d'actionnement (4) et/ou en ce qu'une soupape à siège additionnelle (15) est prévue selon la direction du courant (a) du médium en aval de la soupape à siège (1) pouvant être fermée par l'élément de fermeture mobile (3).
